Europäisches Patentamt

European Patent Office

Office européen des brevets

(11) Publication number: **0 259 528**
A2

## (12) EUROPEAN PATENT APPLICATION

(21) Application number: 86306959.7

(22) Date of filing: 10.09.86

(51) Int. Cl.4: **B29C 39/12** , B32B 31/00

(43) Date of publication of application:
16.03.88 Bulletin 88/11

(84) Designated Contracting States:
AT BE CH DE FR GB IT LI LU NL SE

(71) Applicant: **Hickman, James Arthur Albert**
**14a Seaforth Drive**
**Edinburgh Scotland(GB)**

(72) Inventor: **Hickman, James Arthur Albert**
**14a Seaforth Drive**
**Edinburgh Scotland(GB)**

(74) Representative: **Newby, Martin John et al**
**J.Y. & G.W. Johnson Furnival House 14-18**
**High Holborn**
**London WC1V 6DE(GB)**

(54) Production of a laminate.

(57) A method of producing a laminate comprising forming an assembly of spaced apart first and second preformed sheets, at least one of which is metallic, the assembly having a barrier to passage of liquid resin material between the sheets around at least a lower part of the periphery of the assembly, pouring flowable, settable liquid resin material between the sheets through an upper peripheral edge of the assembly and allowing the introduced resin material to set to bond the sheets together.

Xerox Copy Centre

EP 0 259 528 A2

# Production of a laminate

This invention relates to a method of producing a laminate comprising forming an assembly of first and second preformed sheets which are spaced apart from each other to define a space therebetween and which have a barrier to passage of liquid resin material between the sheets around at least a lower part of the periphery of the assembly, pouring flowable, settable liquid resin material between the sheets through an upper peripheral edge of the assembly, arranging the asembly so that the introduced resin material flows into, and fills the space between, the sheets and allowing the introduced resin material to set thereby bonding the first and second preformed sheets together. Hereinafter such a method will be referred to as a "method of the kind referred to". The invention also relates to a laminate produced by such a method.

It is already known in GB-A-2,155,856 to produce a transparent or translucent glazing unit by a known method of the kind referred to In this known method the first and second preformed sheets comprise glazing sheets, e.g. of glass and/or polycarbonate or acrylic material.

It is also known from US-A-3,560,285 to produce a metallic laminate by injecting foamable material, e.g. urethane, styrene or epozy resin material, between thin, spaced apart aluminum facings. However, in this known method, the use of foamed adhesive presents certain problems since the facing aluminum sheets have to be well supported during injection and subsequent setting to prevent distortion of the laminate. Furthermore the presence of many gas bubbles in the foamed adhesive leads to a laminate having an interlayer which provides a relatively weak joint due to the presence of the many voids and interstices in the finished product. In addition it is often difficult to accurately control the injection of foamed material into narrow spaces to ensure consistency in the distribution of the injected material.

The present invention aims to provide a method of the kind referred to for producing a laminate in which at least one sheet is metallic.

According to one aspect of the present invention, a method of the kind referred to is characterised in at least one of the said first and second preformed sheets is metallic.

The method according to the invention does not employ foamed material as a laminate interlayer but instead uses a curable liquid resin material which is poured between the spaced apart first and second preformed sheets. To ensure good flow, the viscosity of the liquid resin material when poured is comparatively low.

Conveniently both the first and second preformed sheets are metallic, e.g. aluminium.

Suitably the first and second preformed sheets are flat and are typically rectangular. Typically each of the said sheets has a thickness of approximately 2 mm and the sheets of the said asemtly are conveniently spaced up to 6 mm apart, preferably from 1 mm to 2 mm apart.

If the said assembly is flat is is preferably inclined to the horizontal at an angle, e.g. of from 15° to 65°, typically from 20° to 40°, during pouring of the settable liquid resin through an upper peripheral edge of the assembly.

Preferably the said barrier is provided by adhesive strip material which is sandwiched between the said sheets adjacent the periphery of the assembly. The strip material is preferably flexible, e.g. double-sided adhesive tape, and may be gaspermeable or non-permeable to gas.

Any suitable liquid resin material may be used to fill the space between the said sheets. Typically the liquid resin material comprises a pre-mixed liquid adhesive-catalyst system which may be room temperature curing or heat curing. The viscosity of the liquid resin material during pouring should be relatively low, e.g. no more than about 25 cSt, to ensure good flow of liquid material between the sheets during the pouring step. A particularly preferred resin material is obtained by mixing, e.g. hand mixing, "Naftolan Resin S696" or "Naftolan Resin S700" with catalysts designated "K66", "K206" and "K73" (the designated resins and catalysts are manufacured by Degussa AD, Deschaftsbereich Chemie, Frankfurt, West Germany and distributed by Chemetall, Gesellschaft Technische Verfahren mbH Sparte Glas Reutervey 14, Frankfurt, West Germany.

There are substantial advantages in lainating together comparatively thin sheets to provide a relatively thick composite laminate. For example two flat, rectangular sheets of aluminum, each approximately 2 mm in thickness and either mill finished or anodised, may be bonded together with a resin interlayer of up to 6 mm to provide a composite laminate having an overal thickness of up to 10 mm. a thick aluminium-resin-aluminium laminate (e.g. up to 10 mm thick) is considerably cheaper to produce than a similar thickness sheet of solid aluminium and can be cut and/or worked more easily. It is not, of course, essential for the laminated sheets to be flat and thus bent, curved or otherwise shaped metallic sheets can be laminated together to form relatively thick shaped forms which would otherwise have been costly and/or extremely difficult to produce in solid metal form.

Although the first and second preformed sheets are typically both metallic, e.g. aluminium, it is also possible for one of the sheets to be metallic and the other sheet to be glass, polycarbonate, acrylic, any other preformed resin based sheet material, or any other sheet material to which the liquid resin material will bond when set.

According to another aspect of the present invention, a laminate comprising spaced apart first and second preformed sheets, at least one of which is metallic, bonded together by a resin material poured in liquid form between an assembly of said first and second preformed sheets and allowed to set.

An embodiment of the invention will now be described, by way of example, with reference to the following Example.

EXAMPLE

First and second rectangular sheets of anodised aluminum, typically each having a length of 1 m, a width of 1 m and a thickness of 2 mm, where thoroughly cleaned. The first aluminum sheet was then laid in a horizontal position to enable lengths of flexible, double-sided adhesive strip material to be applied thereto. The strip material conveniently had pressure-sensitive adhesive coatings on either of its sides covered by non-adhesive backing layers. Prior to application of the adhesive strip material, one of these backing layers was removed to reveal one of the pressure-sensitive adhesive coatings. The strip material was then adhered to the upwardly facing surface of the first aluminum sheet around first, second, third and fourth peripheral sides of the latter. The opposite ends or the strip material applied to the second peripheral side were butt jointed to respective end portions of the strip material applied to the first and third peripheral sides. However, the opposite ends of the strip material applied to the fourth peripheral side were spaced slightly from the respective end portions of the strip material applied to the first and third peripheral sides to form a pair of spaced apart "air gaps" in the peripherally applied strip material.

The second aluminium sheet was then positioned above the first aluminium sheet, in face-to-face relationship therewith, and was carefully lowered onto the strip material adhered to the first aluminium sheet so that the adhesive strip material was sandwiched between the two aluminium sheets. The adhesive strip material thus served to space the first and second aluminium sheets apart a distance of approximately 2 mm. The other layer of backing paper was then removed from the adhesive strip material applied to the first, second and third peripheral sides (but not the fourth peripheral side) of the first aluminium sheet and the two aluminium sheets where firmly pressed together along these three sides.

The strip material applied along the first, second and third peripheral sides formed a continuous barrier to passage of liquid resin material. Any gap in this barrier was sealed, e.g. with mastic, at this stage.

The assembly of aluminium sheets was then raised into a inclined position with its unsealed edge (i.e. along the fourth peripheral side of the first aluminium sheet) uppermost. Typically, the assembly was inclined at an angle of from 15° to 65°, preferably from 20° to 40°, e.g. 30°, to the horizontal. The unsealed edge of the second aluminium sheet was carefully lifted from the underlying backing layer of the adhesive strip applied to the fourth peripheral side of the first aluminium sheet and a broad but thin spout of a funnel was inserted between the new slightly spaced apart second aluminium sheet and strip material to permit previously prepared flowable, settable liquid resin material, e.g. a premixed, liquid adhesive-catalyst system, to be poured through the funnel downwardly between the aluminium sheets.

The settable liquid resin material was prepared by a so-called hand mixing process involving the hand mixing or stiring of a low viscosity liquid resin with at least one catalyst. A particularly preferred resin material is methacrylate resin, e.g. obtained by mixing, typically hand mixing, "Naftolan Resin S696" or "Naftolan Resin S700" with catalyst designated "K66", "K206" and "K73". This provides a liquid resin material which is of extremely low viscosity compared with other known resin materials.

The volume of resin material required to bond the aluminium together was calculated by multiplying the surface area of one side of one of the aluminium sheets by the desired interlayer thickness. The calculated volume was adjusted slightly to allow for slight shrinkage during setting of the resin material.

The predetermined quantity of selected resin "S696" or "S700" was then measured out by being slowly poured into a measuring beaker and was allowed to degas suficiently to ensure few micro bubbles were held in the basic resin, the actual rate of degassing being dependent on the temperature of the operating environment.

When the selected resin was clear, and had no or little trapped air therein, the catalysts were slowly poured into the resin and gently, but thoroughly, manually stirred, i.e. with the aid of a hand held stirrer. Care was taken to ensure adequate mixing without causing too many air micro bubbles to be generated. The stirred mixture was then allowed to stand to enable dispersion of bubbles generated during mixing.

Catalysts "K206" and "K66" were then added to the selected resin, suitably at a ratio of 100:1 by volume, and catalyst "K73" was added to the resin suitably at a ratio of 100:0.5 by volume. However, these ratios are only an approximate guide and can be substantially altered to effect clarity, strength and curing rate of the resin material.

The curing rate of the liquid resin material with hand mixing is influenced by the operating temperature, which should ideally be between 15°C and 25°C. At temperatures under 15°C the ratio of resin and catalyst must be altered to effect proper curing. At temperatures below 1°C the hand mix ratio of resin and catalysts must be altered and further curing can only be effected by applying heat to the filled laminate for a minimum of 120 minutes.

By using liquid resin having a relatively low viscosity, a homogeneous mixture of liquid resin and catalyst(s) can be obtained by a hand mixing process - i.e. by the use of a hand held stirrer - and does not involve the use of expensive mixing machinery. This means that a laminate can be produced with minimal capital expenditure for machinery. Furthermore the relatively low viscosity of the resin/catalyst mixture enables at least most of the bubbles (e.g. micro bubbles) created by the hand mixing to dissipate freely without the use of additional degassing equipment (e.g. heating equipment or a vacuum pump).

The measured quantity of degassed resin and catalysts was then poured through the funnel between the inclined assembly of aluminium sheets care being taken to ensure a slow even pour into the centre of the interspace between the panels. The liquid resin material flowed downwardly and outwardly, with the upper corners of the interspace, in the region of the previously mentioned air gaps left substantially unfilled.

After the predetermined, measured amount of liquid resin material had been introduced into the interspace between the aluminium sheets, the funnel was withdrawn ensuring that little or no resin material dripped over the backing layer of the adhesive strip applied to the fourth peripheral side of the first aluminium sheet. Then the backing layer was carefully, manually, pulled away from this adhesive strip and the second aluminium sheet was pressed firmly against the revealed adhesive surface of the adhesive strip to ensure good adhesion thereto. At this stage the aluminium sheets bulged apart slightly, and the liquid resin material only partly filled the interspace therebetween.

The assembly of aluminium sheets was then lowered to a horizontal position and air in the sheet interspace was allowed to evacuate naturally through the air gaps. It was important to ensure that the assembly was positioned horizontally as soon as possible after the liquid resin material had been poured into the interspace between the aluminium sheets so that the resin material was still in a flowable state.

When the aluminium sheets were in the horizontal position, the weight of the upper sheet caused the liquid resin material to spread out to provide an even thickness interlayer between the sheets. Initially the liquid resin material flowed back over the lower aluminium sheet along a path of least liquid flow resistance, i.e. over the part of the sheet previously "wetted" or "lubricated" by the resin material as it was poured into the inter space. After a short time the liquid resin material met the adhesive strip applied along the fourth peripheral side and then gradually spread outwardly towards the unfilled corners of the interspace thereby expelling air from the interspace through the air gaps. When the interspace was completely filled with an even thickness of resin material and the air was fully evacuated from between the aluminium sheets, typically after approximately 2 minutes, the air gaps were sealed, e.g. with mastic, and the resin material was allowed to cure (with the assembly still in a horizontal position) for approximately 3 to 6 hours at normal room temperature. In view of the thickness of the resin interlayer, it was found advisable to cool the sheet assembly, e.g. by air or water, during curing of the resin material.

An aluminium-resin-aluminium laminate was thus produced having a thickness of approximately 6 mm. The laminate was found to be easier to cut and work than a solid sheet of aluminium of the same thickness. The resin interlayer contained few voids and provided a strong joint.

It will be appreciated that, especially in the case of extra long aluminium sheets, it may be necessary to have a number of spaced apart filling points along the upper edge of the periphery of the aluminium sheets. For example two or more funnels could be employed for introducing liquid resin material into the interspace between the aluminium sheets. In this case, however, it is necessary to provide at least one air gap in the peripheral seal between each pair of adjacent resin filling points.

In the above-described Example, the adhesive strip material sandwiched between the aluminium sheets around the periphery thereof spaces the sheets apart and blocks the passage of the liquid resin material therethrough when the latter is poured between the sheets and during the setting of the resin material. The strip material may be impervious to gas at least to the extent that air expelled from between the aluminium sheets as the liquid resin material spreads between the sheets will not pass through the strip material but will be forced to pass out through the air gaps. A particularly suitable adhesive strip material is a polyurethane tape known as "Normount V2500" (a trade name of the U.S. company Norton Performance Plastics). However other types of strip material, e.g. gas-permeable strip material, may be employed.

It will be appreciated that, unlike forming laminated glass, in the formation of an opaque laminate, e.g. comprising two metallic sheets bonded together by a resin interlayer, it is not essential for the liquid resin material introduced between the spaced apart sheets to be entirely free of bubbles since the resin interlayer formed is not visible. It is important, however, that there are not a sufficient number of air bubbles present to weaken the interlayer.

It has been previously proposed to inject foamed adhesive between spaced apart sheets, the foamed adhesive expanding as it sets to produce an expanded foam interlayer. The method described above differs from such known methods in that the introduced liquid resin material does not expand as it sets and thus produces an at least substantially non-cellular sheet-bonding layer. This is advantageous in that it is strong, and does not force the sheets apart as it sets. Furthermore it is easy to calculate the volume of resin material to be introduced between the sheets as no expansion of the resin material occurs during curing.

Although methacrylate resin is a preferred liquid resin material for pouring between spaced apart sheets to be laminated together, it is possible to use other resin materials, such as polyester resins, in applications where attributes, such as lack of clarity and ultra violet stability, are not important. This may be the case, for example, in metal to metal laminates. The flowability of the liquid resin material during pouring is important and will be dependent, to some extent, on the spacing apart of the sheets to be laminated together. However to ensure good flow characteristics, wven when the sheets are spaced a small distance apart, the liquid resin material during pouring should have a relatively low kinematic viscosity - for example less than about 25 cSt (centistokes) at the pouring temperatue (typically 20°C). Preferably the kinematic viscosity, at 20°C, should be no more than 15 cSt and acceptable results have been achieved with the liquid resin material having a kinematic viscosity of 14.2 cSt at 20°C. However, the best results have been achieved with a liquid resin material having a kinematic viscosity at 20°C of less than 5 cSt, typically 3.1 cSt.

The sheets may be positioned in a vertical position during application of the adhesive strip and/or during resin pouring. However, it is preferable for the resin material to set with the shets in a lowered, e.g. horizontal, position.

As previously mentioned the adhesive strip may be in the form of gas-permeable tape or strip material. In this case air gaps need not be provided, air being expelled through the tape when the laminated assembly is lowered to its resin-setting position. A particularly suitable type of gas-permeable tape is marketed by 3M under the trade name "Scotchmount".

## Claims

1. A method of producing a laminate comprising forming an assembly of first and second preformed sheets which are spaced apart from each other to define a space therebetween and which have a barrier to passage of liquid resin material between the sheets around at least a lower part of the periphery of the assembly, pouring flowable, settable liwuid resin material between the sheets through an upper peripheral edge of the assembly, arranging the assembly so that the introduced liquid resin material flows into, and fills the space between, the sheets and allowing the introduced resin material to set thereby bonding the first and second preformed sheets together, characterised in that at least one of the said first and second preformed sheets is metallic.

2. A method according to claim, 1 characterised in that the sheets are spaced apart a distance of up to 6 mm, e.g. from 1 mm to 6 mm.

3. A method according to claim 1 or 2, characterised in that both the first and second preformed sheets are metallic.

4. A method according to claim 1 or 2, characterised in that ta least one of the first and second preformed sheets comprises an aluminium sheet.

5. a method according to claim 1 or 2, characterised in that one of said sheets is non-metallic.

6. A method according to any of the preceding claims, characterised in that the said assembly is inclined to the horizontal at an angle of from 15° to 65°, preferably 20° to 40°, during pouring of the liquid resin material between thee sheets.

7. A method according to any of the preceding claims, characterised in that said barrier is provided by adhesive strip material, which is preferably flexible, sandwiched between the said sheets adjacent in the periphery of the assembly.

8. A method according to claim 7, characterised in that the adhesive strip material is at least substantially gas impermeable.

9. A method according to any of the preceding claims, characterised in that said liquid resin material has a kinematic viscosity of less than 25 cSt when it is poured between said sheets.

10. A method according to claim 9, characterised in that the kinematic viscosity of said liqiud resin material 20°C is no more than 15 cSt, preferably no more than 5 cSt.

11. A laminate produced by the method according to any of the preceding claims.